# EUROPEAN PATENT SPECIFICATION

(11) **EP 3 623 692 B1**
(45) Date of publication and mention of the grant of the patent: **13.10.2021**
(21) Application number: 19190524.9
(22) Date of filing: 07.08.2019
(51) Int. Cl.: F21S 8/04, F21V 15/01, F21V 8/00, F21V 17/16, F21V 17/06, F21Y 113/13, F21Y 103/10, F21Y 115/10

(54) **PANEL LIGHT DEVICE**
FLÄCHENLEUCHTE
DISPOSITIF D'ÉCLAIRAGE DE PANNEAU

(30) Priority: 14.09.2018 CN 201821509999 U
(43) Date of publication of application: 18.03.2020
(73) Proprietor: Xiamen Eco Lighting Co., Ltd., Xiamen Area, Fujian (CN)
(72) Inventor: GONG, Guangquan, Xiamen Area, Fujian (CN); ZHANG, Jiansheng, Xiamen Area, Fujian (CN); LIU, Guanyinlian, Xiamen Area, Fujian (CN)
(74) Representative: dompatent von Kreisler Selting Werner - Partnerschaft von Patent- und Rechtsanwälten mbB

(56) References cited:
- CN-A- 107 270 189
- CN-B- 103 104 868
- CN-U- 206 072 980
- CN-U- 206 582 816
- US-A1- 2017 329 070

## Description

### TECHNICAL FIELD

The present invention relates to the technical field of illumination devices, and more particularly to a panel light device.

### BACKGROUND

In traditional luminaires, in order to meet the needs of illumination, the luminescence of the light source is relatively high, and the emitted light is glaring, due to the small volume of the light source; in order to improve the comfort of lighting, a light guide plate is used to enlarge the light emitting area of the light source, so that the lights emitted by the light source may be evenly dispersed on the light guide plate with a larger area, and then the light guide plate provides illumination, such that the light is softer and more comfortable. Therefore, the panel light device is widely used in indoor illumination because of its uniform illumination and soft light, compared with other light sources, the panel light device has better lighting effect and more comfortable, so it is more popular.

At present, the panel light device with dimming and toning have big defects in the appearance, because the dimming and toning of ordinary panel light devices is generally realized by two kinds of LED beads, especially for relatively slender LED beads (for example, 4014 LED bead), the intervals between the LED beads with a same color temperature is relatively large when arranged, resulting in a relatively serious phenomenon of lamp shadow visible in the appearance, called "firefly phenomenon", the lamp shadow phenomenon of the monochrome temperature is more obvious when lit. CN 206582816 U has disclosed a waterproof and dustproof structure for a large panel light device, which aims to improve the waterproof and dustproof performance, but mentions nothing concerning LED leads including its character and arrangement. Additional prior art is known from CN 103104868 B, CN 206072980 U, CN 107270189 A and US 2017/329070 A1.

### SUMMARY OF INVENTION

The general objective of the present disclosure is to provide a panel light device for solving the technical problem of the serious lamp shadow phenomenon existed in the conventional panel light device.

The above objective is achieved by a panel light device which includes a back plate, a light emitting assembly and a face frame provided with a light emitting opening, which are sequentially disposed; the face frame includes a frame body and a rim section disposed at an inner side of the frame body, one end of the rim section is connected with the frame body, and the other end is a free end; the light emitting assembly abuts against the rim section; and the light emitting assembly includes a light source plate disposed at the inner side of the frame body with a plurality of LED beads being provided on the light source plate in a lateral way, two color temperatures are provided by the plurality of LED beads, and the LED beads with the two color temperatures are alternately arranged at equal intervals, a middle portion of the rim section is provided with a rib, and the free end of the rim section is provided with a flange having a height equal to the height of the rib, and where a distance from the LED beads to the free end of the rim section is A, and a distance between the centers of two adjacent LED beads of the same color temperature is P, and a ratio of A/P ≧ 1.2.

In an embodiment of the present invention, the rim section has a width of 12 to 18 mm; the frame body has a width of 5 to 9 mm.

In an embodiment of the present invention, the rim section has a width of 15 to 17 mm; and the frame body has a width of 6 to 8 mm.

In an embodiment of the present invention, the frame body is provided with a first groove for snap-fit of the back plate, and the back plate is provided with a snap-fit edging that cooperates with the first groove.

In an embodiment of the present invention, the frame body is provided with a second groove, the bottom of the second groove is provided with screw holes or sidewalls of the second groove have thread grooves, adapted to fix the back plate with screws; and a common side plate is disposed between the second groove and the first groove, and the second groove is positioned at the inner side of the frame body.

In an embodiment of the present invention, the first groove has a depth of 1/2 to 2/3 of the height of the frame body.

In an embodiment of the present invention, the bottom of the second groove is connected to the side plate at a 1/5 to 1/2 height of the side plate from the bottom of the side plate.

In an embodiment of the present invention, the bottom of the frame body provided with a cavity, and the cavity is positioned below the first groove and the second groove.

An advantage effect of the panel light device in accordance with an embodiment of the present disclosure is that: the lamp shadow phenomenon of the panel light device can be obviously reduced by setting the ratio of A/P to be greater than or equal to 1.2, where A is a distance from the LED beads to the free end of the rim section, and P is a center distance between two nearest LED beads with the same color temperature. Moreover, in the present disclosure, through reducing the width of the frame body and relatively extending the width of the rim section, when the width of the face frame is constant or slightly changed, the lights emitted by the LED beads have a distance large enough for sufficiently mixing light to make the lights at the edge of the rim section uniform, and because the width of the face frame is constant or changed slightly, the light emitting area can remain unchanged or not significantly reduced when the lamp shadow phenomenon of the panel light device is weaken.

### BRIEF DESCRIPTION OF DRAWINGS

FIG. 1 is a schematic structural view of a panel light device according to an embodiment of the present disclosure;
FIG. 2 is a schematic exploded view of a panel light device according to an embodiment of the present disclosure;
FIG. 3 is a schematic structural view of a face frame of a panel light device according to an embodiment of the present disclosure.

In the drawings:
1 back plate, 11 snap-fit edging, 2 light emitting assembly, 21 light source plate, 22 LED bead, 23 diffusion plate, 24 light guide plate, 25 reflection sheet, 3 face frame, 4 frame body, 41 first groove, 42 second groove, 43 screws, 44 side plate, 45 cavity, 5 rim section, 51 rib, 52 flange, 6 gasket, 7 power source drive, 71 input wire, 8 wires, 9 thermal conductive adhesive tape.

### DETAILED DESCRIPTION

In order to make the objectives, technical solutions and advantages of the present disclosure more comprehensible, the present disclosure is further described in detail below with reference to the accompanying drawings and embodiments. It is understood that the specific embodiments described herein are merely illustrative of the claimed invention and are not intended to limit the claimed invention.

It should be noted that when a component is referred to as being "fixed" to/on or "provided" on/with another component, it can be directly or indirectly on the other component. When a component is referred to as being "connected" to/with another component, it may be directly or indirectly connected to/with the other component. The orientation or positional relationship of the terms "upper", "lower", "left", "right", etc., is based on the orientation or positional relationship shown in the drawings, and is merely for the convenience of description, it is not intended to indicate or imply that the devices or components referred to must have a particular orientation, or have to be constructed and operated in a particular orientation, and therefore these are not to be construed as limiting the disclosure. The terms "first" and "second" are used for the convenience of description only, and are not to be understood as indicating or implying a relative importance or implicitly indicating the number of technical features. The term "a plurality of" means two or more, unless specifically defined otherwise.

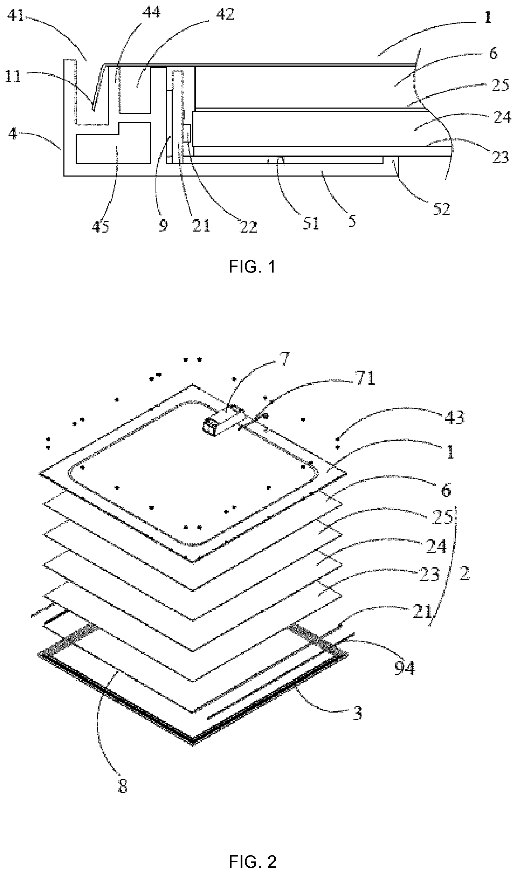

Refer to FIG. 1 and FIG. 2, a panel light device includes a back plate 1, a light emitting assembly 2 and a face frame 3 provided with a light emitting opening, which are sequentially disposed along a direction of light transmission; the face frame 3 includes a frame body 4 and a rim section 5 disposed at an inner side of the frame body 4, the rim section 5 is connected with the frame body 4 at one end, and the other end is a free end; the light emitting assembly 2 abuts against the rim section 5; the light emitting assembly 2 includes a light source plate 21 disposed at the inner side of the frame body 4, a plurality of LED beads 22 are disposed on the light source plate 21 in a lateral way, and at least two color temperatures are provided by the plurality of LED beads 22, and the LED beads of a same color temperature being arranged at intervals; where a distance from the LED beads to the free end of the rim section 5 is A, and a distance between the centers of two adjacent LED beads 22 of the same color temperature is P, then a ratio of A/P ≧ 1.2. In the present embodiment, the distance A here is a distance from the surface of the light source panel 21 to the free end of the rim section 5.

In the above solution, the ratio of A/P, where A is the distance from the LED beads 22 to the free end of the rim section 5, P is the center distance between two nearest LED beads 22 of the same color temperature, is set to be greater than or equal to 1.2, when the lights emitted by the LED beads 22 leave the free end, it is an effective light emitting area, and the strong lights area and the weak lights area formed by the intersection of the light beams are prevented from being exposed at the light emitting opening of the face frame 3, and the lamp shadow phenomenon of the panel light device can be obviously weakened or even eliminated.

In order to further improve the quality of the panel light device and eliminate the lamp shadow phenomenon, in this embodiment, the value of A/P is 1.5.

Further, in order to adapt to the size of the LED beads 22 on the market and the size of the commonly used panel light device, the rim section 5 has a width of 12 to 18 mm; preferably 15 to 17 mm; in this embodiment, the rim section 5 has a width of is 16 mm.

Further, the frame body 4 has a width of 5 to 9 mm. In the present embodiment, the width of the frame body 4 not only meet the installation strength requirement of the panel light device, but also make the size of the frame body 4 smaller, and increase the proportion of the illumination area of the panel light device. Preferably, the frame body 4 has a width of 6 to 8 mm, and in this embodiment, the frame body 4 has a width of 7 mm, for panel light devices of a same size, when the width of the face frame 3 is constant or slightly changed, by reducing the width of the frame body 4 and relatively extending the width of the rim section 5, so that the lights emitted by the LED beads have a distance large enough for sufficiently mixing lights to make the lights at the edge of the rim section 5 uniform, and since the width of the face frame is constant or changed slightly, the light emitting area can remain unchanged or not significantly reduced when the lamp shadow phenomenon of the panel light device is weaken.

Further, in the present embodiment, two color temperatures are provided by the plurality of LED beads 22, and the LED beads 22 with the two color temperatures are alternately arranged at equal intervals.

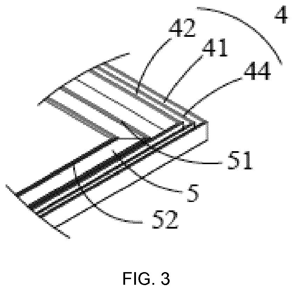

Further, as shown in FIG. 1 and FIG. 3, in order to better fit and fix the back plate 1 and the frame body 4, the frame body 4 is provided with a first groove 41 for snap-fit of the back plate 1, and the back plate 1 is provided with a snap-fit edging 11 that cooperates with the first groove 41. With the back plate 1 being fixed to the frame body 4, and then to fix and protect the light emitting assembly 2 is convenient and quick.

Further, in order to fix the back plate 1 better, the frame body 4 is provided with a second groove 42, and the bottom of the second groove 42 is provided with screw holes or sidewalls of the second groove 42 have thread grooves, for fixing the back plate 1 with screws 43; a common side plate 44 is disposed between the second groove 42 and the first groove 41, and the second groove 42 is positioned at the inner side of the frame body 4. In this embodiment, with the first groove 41 being preliminarily fixed, there is no need to position screw holes in the back plate 1, and then the use of the screws 43 for fixing is more convenient; and in this embodiment, the frame body 4 has a compact structure, and thus a frame body 4 with a small size may be obtained.

Further, in order to prevent the structure of the first groove 41 from being unstable or easily deformed by an external force, the first groove 41 has a depth of 1/2 to 2/3 of the height of the frame body 4;

Similarly, in order to avoid the structure instability of the second groove 42, the bottom of the second groove 42 is connected to the side plate 44 at a 1/5 to 1/2 height of the side plate 44 from the bottom of the side plate 44; meanwhile, in the present embodiment, when the back plate 1 is fixed to the first groove 41, as the bottom of the second groove 42 is higher than the bottom of the first groove 41, and the bottom of the second groove 42 acts as a fulcrum, thus the force acting on the side plate 44 is transmitted more evenly, so that the side plate 44 is less likely to be deformed and has a longer life, and when used, the frame body 4 is more evenly loaded and the structure thereof is more stable.

Further, in order to save material and reduce cost, the bottom of the frame body 4 is provided with a cavity 45 positioned below the first groove 41 and the second groove 42, and the thickness of the bottom of the first groove 41 and the second grooves 42 are set to be the same. In this embodiment, the structure of the cavity may save material, reduce the weight of the panel light device, and further improve the structural stability of the frame body 4.

Further, during the production process of the face frame 3, the four frame pieces of the face frame 3 are need to be joined, in order to better perform a welding, the middle portion of the rim section 5 is provided with a rib 51, and the free end of the rim section 5 is provided with a flange 52 having a height equal to the height of the rib 51. In this embodiment, when splicing the face frame 3, to implement the welding at the side edge of the joint section of the rib 51, which is more convenient and more stable; and the situation that the unevenness of the rim section 5 caused by the welding which further causes the quality of the panel light device to deteriorate can be avoided.

In order to fix the light emitting assembly 2 better and avoid the displacement of the light emitting assembly 2 that causes the quality of the panel light device to deteriorate, a gasket 6 is further disposed between the back plate 1 and the light emitting assembly 2; meanwhile, the gasket 6 also protects the light emitting assembly 2 from the friction damage to the contact between the light emitting assembly 2 and the back plate 1.

In this embodiment, the light emitting assembly 2 further includes a reflection sheet 25, a light guide plate 24, and a diffusion plate 23 which are sequentially disposed from the back plate to the light output direction. Further, the back plate 1 is further provided with a power source drive 7, the power source drive 7 and the light emitting assembly 2 are electrically connected via wires 8; and the power source drive 7 may be powered on via the input wire 71.

In order to prevent the LED beads 22 from being overheated and damaged, a thermal conductive adhesive tape 9 is further disposed between the light source plate 21 and the frame body 4.

It is understood that the face frame 3 used in the present disclosure may be an aluminum frame, a wooden frame, etc., and is not to be limited herein. The foregoing description are merely preferred embodiments of the present application, and are not intended to limit the present application. The invention is defined by the subject-matter of the appended claims.

## Claims

1. Panel light device, comprising:
a back plate (1), a light emitting assembly (2) and a face frame (3) provided with a light emitting opening, which are sequentially disposed;
the face frame (3) comprising:
a frame body (4); and
a rim section (5) disposed at an inner side of the frame body (4), wherein one end of the rim section (5) is connected with the frame body (4), and the other end is a free end;
wherein the light emitting assembly (2) is configured to abut against the rim section (5), and comprises
a light source plate (21) disposed at the inner side of the frame body (4), with a plurality of LED beads (22) being disposed on the light source plate (21) in a lateral way,
**characterized in that**
two color temperatures are provided by the plurality of LED beads (22), and the LED beads (22) with the two color temperatures are alternately arranged at equal intervals,
a middle portion of the rim section (5) is provided with a rib (51), and the free end of the rim section (5) is provided with a flange (52) having a height equal to the height of the rib (51), and
a distance from the LED beads(22) to the free end of the rim section (5) is A, and a distance between the centers of two adjacent LED beads (22) of the same color temperature is P, and a ratio of A/P ≧ 1.2.

2. The panel light device according to claim 1, wherein the rim section (5) has a width of 12 to 18 mm; and the frame body (4) has a width of 5 to 9 mm.

3. The panel light device according to claim 2, wherein the rim section (5) has a width of 15 to 17 mm; and the frame body (4) has a width of 6 to 8 mm.

4. The panel light device according to claim 1, wherein the frame body (4) is provided with a first groove (41) for snap-fit of the back plate (1), and the back plate (1) is provided with a snap-fit edging (11) that cooperates with the first groove (41).

5. The panel light device according to claim 4, wherein the frame body (4) is provided with a second groove (42), and the bottom of the second groove (42) is provided with screw holes or sidewalls of the second groove (42) have thread grooves, adapted to fix the back plate 1 with screws (43); and a common side plate (44) is disposed between the second groove (42) and the first groove (41), and wherein the second groove (42) is positioned at the inner side of the frame body (4).

6. The panel light device according to claim 5, wherein the first groove (41) has a depth of 1/2 to 2/3 of the height of the frame body (4).

7. The panel light device according to claim 5, wherein the bottom of the second groove (42) is connected to the side plate (44) at a 1/5 to 1/2 height of the side plate (44)from the bottom of the side plate (44).

8. The panel light device according to claim 5, wherein the bottom of the frame body (4) is provided with a cavity (45) and the cavity (45) is positioned below the first groove (41) and the second groove (42).

## Patentansprüche

1. Flächenleuchtenvorrichtung, die aufweist:
eine Rückplatte (1), eine lichtemittierende Anordnung (2) und einen mit einer lichtemittierenden Öffnung versehenen Frontrahmen (3), die nacheinander angeordnet sind;
wobei der Frontrahmen (3) aufweist:
einen Rahmenkörper (4), und
einen Randabschnitt (5), der an einer Innenseite des Rahmenkörpers (4) angeordnet ist, wobei ein Ende des Randabschnitts (5) mit dem Rahmenkörper (4) verbunden ist und das andere Ende ein freies Ende ist;
wobei die lichtemittierende Anordnung (2) so ausgebildet ist, dass sie an dem Randabschnitt (5) anliegt, und aufweist
eine Lichtquellenplatte (21), die an der Innenseite des Rahmenkörpers (4) angeordnet ist, wobei eine Vielzahl von LED-Perlen (22) lateral auf der Lichtquellenplatte (21) angeordnet sind,
**dadurch gekennzeichnet, dass**
zwei Farbtemperaturen von der Vielzahl von LED-Perlen (22) bereitgestellt werden, und wobei die LED-Perlen (22) mit den zwei Farbtemperaturen in gleichen Intervallen abwechselnd angeordnet sind,
ein Mittelabschnitt des Randabschnitts (5) mit einer Rippe (51) versehen ist und das freie Ende des Randabschnitts (5) mit einem Flansch (52) versehen ist, der eine Höhe aufweist, die gleich der Höhe der Rippe (51) ist, und
ein Abstand von den LED-Perlen (22) zu dem freien Ende des Randabschnitts (5) A ist, und ein Abstand zwischen den Mitten der zwei benachbarten LED-Perlen (22) mit der gleichen Farbtemperatur P ist, und ein Verhältnis A/P ≥ 1,2 ist.

2. Flächenleuchtenvorrichtung nach Anspruch 1, wobei der Randabschnitt (5) eine Breite von 12 bis 18 mm aufweist; und der Rahmenkörper (4) eine Breite von 5 bis 9 mm aufweist.

3. Flächenleuchtenvorrichtung nach Anspruch 2, wobei der Randabschnitt (5) eine Breite von 15 bis 17 mm aufweist; und der Rahmenkörper (4) eine Breite von 6 bis 8 mm aufweist.

4. Flächenleuchtenvorrichtung nach Anspruch 1, wobei der Rahmenkörper (4) mit einer ersten Nut (41) für ein Einrasten der Rückplatte (1) versehen ist, und die Rückplatte (1) mit einer Einrastkante (11) versehen ist, die mit der ersten Nut (41) zusammenwirkt.

5. Flächenleuchtenvorrichtung nach Anspruch 4, wobei der Rahmenkörper (4) mit einer zweiten Nut (42) versehen ist und der Boden der zweiten Nut (42) mit Schraubenlöchern versehen ist oder Seitenwände der zweiten Nut (42) Gewindenuten aufweisen, die dazu geeignet sind, die Rückplatte (1) mit Schrauben (43) zu fixieren; und wobei eine gemeinsame Seitenplatte (44) zwischen der zweiten Nut (42) und der ersten Nut (41) angeordnet ist, und wobei die zweite Nut (42) an der Innenseite des Rahmenkörpers (4) angeordnet ist.

6. Flächenleuchtenvorrichtung nach Anspruch 5, wobei die erste Nut (41) eine Tiefe von 1/2 bis 2/3 der Höhe des Rahmenkörpers (4) aufweist.

7. Flächenleuchtenvorrichtung nach Anspruch 5, wobei der Boden der zweiten Nut (42) mit der Seitenplatte (44) in einer Höhe von 1/5 bis 1/2 der Seitenplatte (44) vom Boden der Seitenplatte (44) aus verbunden ist.

8. Flächenleuchtenvorrichtung nach Anspruch 5, wobei der Boden des Rahmenkörpers (4) mit einem Hohlraum (45) versehen ist und der Hohlraum (45) unterhalb der ersten Nut (41) und der zweiten Nut (42) positioniert ist.

## Revendications

1. Dispositif de voyant, comprenant :
une plaque arrière (1), un ensemble électroluminescent (2) et un cadre frontal (3) pourvu d'une ouverture électroluminescente, qui sont disposés séquentiellement ;
le cadre frontal (3) comprenant :
un corps de cadre (4) ; et
une section de jante (5) disposée sur un côté intérieur du corps de cadre (4), une extrémité de la section de jante (5) étant reliée au corps de cadre (4), et l'autre extrémité étant une extrémité libre ;
l'ensemble électroluminescent (2) étant conçu pour venir en butée contre la section de jante (5), et comprenant
une plaque de source lumineuse (21) disposée sur le côté intérieur du corps de cadre (4), avec une pluralité de billes LED (22) disposées sur la plaque de source lumineuse (21) d'une manière latérale,
**caractérisé en ce que**
deux températures de couleur sont fournies par la pluralité de billes LED (22), et les billes LED (22) avec les deux températures de couleur sont disposées en alternance à des intervalles égaux,
une partie médiane de la section de jante (5) est pourvue d'une nervure (51) et l'extrémité libre de la section de jante (5) est pourvue d'un rebord (52) ayant une hauteur égale à la hauteur de la nervure (51), et
une distance entre les perles LED (22) et l'extrémité libre de la section de jante (5) est A, et une distance entre les centres de deux perles LED adjacentes (22) de la même température de couleur est P, et un rapport de A/P ≥ 1,2.

2. Dispositif de voyant selon la revendication 1, la section de rebord (5) ayant une largeur de 12 à 18 mm ; et le corps de cadre (4) ayant une largeur de 5 à 9 mm.

3. Dispositif de voyant selon la revendication 2, la section de rebord (5) ayant une largeur de 15 à 17 mm ; et le corps de cadre (4) ayant une largeur de 6 à 8 mm.

4. Dispositif de voyant selon la revendication 1, le corps de cadre (4) étant pourvu d'une première rainure (41) pour l'encliquetage de la plaque arrière (1), et la plaque arrière (1) étant pourvue d'une bordure par encliquetage (11) qui coopère avec la première rainure (41).

5. Dispositif de voyant selon la revendication 4, le corps de cadre (4) étant pourvu d'une deuxième rainure (42) et le fond de la deuxième rainure (42) étant pourvu de trous de vis ou de parois latérales de la deuxième rainure (42) avec des rainures filetées, adaptées pour fixer la plaque arrière 1 avec des vis (43) ; et une plaque latérale commune (44) étant disposée entre la deuxième rainure (42) et la première rainure (41), et la deuxième rainure (42) étant positionnée sur le côté intérieur du corps de cadre (4).

6. Dispositif de voyant selon la revendication 5, la première rainure (41) ayant une profondeur de 1/2 à 2/3 de la hauteur du corps de cadre (4).

7. Dispositif de voyant selon la revendication 5, le fond de la seconde rainure (42) étant relié à la plaque latérale (44) à une hauteur de 1/5 à 1/2 de la plaque latérale (44) à partir du fond de la plaque latérale (44).

8. Dispositif de voyant selon la revendication 5, le fond du corps de cadre (4) étant pourvu d'une cavité (45) et la cavité (45) étant positionnée au-dessous de la première rainure (41) et de la deuxième rainure (42).
